(19) Europäisches Patentamt
European Patent Office
Office européen des brevets

(11) Veröffentlichungsnummer: **0 207 327**
**B1**

(12) **EUROPÄISCHE PATENTSCHRIFT**

(45) Veröffentlichungstag der Patentschrift: **03.08.88**

(51) Int. Cl.⁴: **C 08 L 69/00** // (C08L69/00, 51:04, 25:02, 75:04)

(21) Anmeldenummer: **86107751.9**

(22) Anmeldetag: **06.06.86**

(54) **Thermoplastische Formmassen.**

(30) Priorität: **14.06.85 DE 3521408**

(43) Veröffentlichungstag der Anmeldung: **07.01.87 Patentblatt 87/2**

(45) Bekanntmachung des Hinweises auf die Patenterteilung: **03.08.88 Patentblatt 88/31**

(84) Benannte Vertragsstaaten: **DE FR GB IT NL**

(56) Entgegenhaltungen:
**EP - A - 0 104 695**
**US - A - 3 813 358**
**US - A - 4 179 479**

(73) Patentinhaber: **BAYER AG, Konzernverwaltung RP Patentabteilung, D-5090 Leverkusen 1 Bayerwerk (DE)**

(72) Erfinder: **Kress, Hans-Jürgen, Dr., Scheiblerstrasse 111, D-4150 Krefeld (DE)**
Erfinder: **Schoeps, Jochen, Dr., Windmühlenstrasse 126, D-4150 Krefeld 1 (DE)**
Erfinder: **Quiring, Bernd, Dr., Albrecht-Haushofer-Strasse 2, D-5090 Leverkusen 1 (DE)**

EP 0 207 327 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind thermoplastische Formmassen, enthaltend

A) 10 bis 90 Gew.-Teile eines thermoplastischen aromatischen Polycarbonats,

B) 10 bis 50 Gew.-Teile eines Pfropfpolymerisats aus

B.1) 5 bis 90 Gew.-Teile, vorzugsweise 30 bis 80 Gew.-Teile einer Mischung aus

B.1.1) 50 bis 95 Gew.-Teile Styrol, α-Methylstyrol, kernsubstituiertem Styrol, Methylmethacrylat oder Mischungen daraus, und

B.1.2) 50 bis 5 Gew.-Teile (Meth)Acrylnitril, Methylmethacrylat, Maleinsäureanhydrid, N-substituiertem Maleinimid oder Mischungen daraus, auf

B.2) 95 bis 10 Gew.-Teile, vorzugsweise 70 bis 20 Gew.-Teile, eines Kautschuks mit einer Glastemperatur $T_G \leq 10°C$,

C) 0 bis 80 Gew.-Teile eines thermoplastischen Copolymerisats aus

C.1) 50 bis 95 Gew.-Teile Styrol, α-Methylstyrol, kernsubstituiertem Styrol, Methylmethacrylat oder Mischungen daraus, und

C.2) 50 bis 5 Gew.-Teile (Meth)Acrylnitril, Methylmethacrylat, Maleinsäureanhydrid, N-substituiertem Maleinimid oder Mischungen daraus, wobei die Summe der Gew.-Teile aus A) + B) + C) jeweils 100 Gew.-Teile beträgt, und

D) 0,5 bis 10 Gew.-Teile, vorzugsweise 1,0 bis 5 Gew.-Teile, bezogen auf die 100 Gew.-Teile der Summe aus A) + B) + C), eines oder mehrerer Polyurethane aus aliphatischen Polyolen und Polyisocyanaten, sowie gegebenenfalls wirksame Mengen an Stabilisatoren, Pigmenten, Entformungsmitteln, Flammschutzmitteln und/oder Antistatika, die

dadurch gekennzeichnet sind, dass das Polyurethan eine Verbindung der Formel (I)

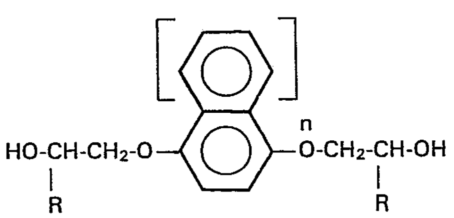

(I)

als Kettenverlängerer eingebaut enthält, worin R H, ein $C_1$- bis $C_{12}$-Alkyl, ein Cycloalkyl, ein gegebenenfalls substituiertes Aryl und n 0 oder 1 sind.

Geeignete Reste R in (I) sind Methyl, Ethyl, Butyl, Isopropyl, Octyl, Isooctyl, Cyclopentyl, Cyclohexyl, Phenyl, Naphthyl, Chlorphenyl, Bromphenyl und Alkylphenyle.

Thermoplastische Formmassen aus Polycarbonaten, Pfropfpolymerisaten und gegebenenfalls Copolymerisaten sind seit langem bekannt, wobei das Problem der Zusammenfliessnahtfestigkeit eine grosse Rolle spielt (siehe beispielsweise DE-OS 2 259 565).

Zwar sind aus der EP-OS 0 080 767 Mischungen aus Polycarbonaten, Copolymerisaten und zwei verschiedenen Pfropfpolymerisaten bekannt, denen gute Fliesseigenschaften in Kombination mit guter Zähigkeit, Härte, Steifigkeit und gute Werte im Kugelfalltest zugesprochen werden.

Für die Herstellung von grossformatigen beziehungsweise komplizierten Teilen über Spritzguss, wie z.B. Computergehäusen, Kfz-Teilen oder Platten für den Bausektor, reicht jedoch manchmal die Fliessfähigkeit solcher Materialien nicht aus. Das vollständige und rasche Ausfüllen der Spritzform ist in solchen Fällen noch verbesserungsbedürftig.

Es wurde nun gefunden, dass durch Zusatz von speziellen Polyurethanen die Fliessfähigkeit von Polycarbonat/ABS-Mischungen deutlich verbessert werden kann, bei gleichzeitiger Beibehaltung der guten mechanischen Eigenschaften derartiger Mischungen.

Aus der EP-OS 0 104 695 sind Mischungen aus einem oder mehreren Pfropfpolymerisaten, einem oder mehreren Copolymerisaten, einem oder mehreren Polycarbonaten und einem oder mehreren Polyurethanen, bekannt. Derartigen Mischungen werden eine gute Benzinbeständigkeit, gute Verarbeitungseigenschaften und ein gutes Fliessverhalten zugeschrieben.

US-PS 4 170 479 beschreibt thermoplastische Polyurethanelastomermischungen aus 40 bis 100% eines thermoplastischen Polyurethans, 0 bis 60% eines thermoplastischen Polymeren (Polycarbonat) und 0,5 bis 10% eines Acrylpolymeren. Die Produkte zeichnen sich durch eine gute Homogenität der Mischung und die Formteile durch einen verbesserten Glanz aus.

Mischungen aus Polycarbonat und 0,25 bis 50% eines Polyurethans sowie 0,01 bis 2,0% eines Pfropfpolymeren (Alkenylcyanid und Vinylaromaten auf Polybutadien), die eine verringerte Haarrissbildung zeigen, sind gemäss DE-OS 2 304 214 bekannt.

Es hat sich nun gezeigt, dass der Zusatz eines Polyurethans zu einer PC/ABS-Mischung zwar die gewünschte Fliessfähigkeit verbessert, jedoch oft zu einer ungenügenden Thermostabilität der Mischungen führt. Dies lässt sich jedoch vermeiden, wenn für das erfindungsgemässe Polyurethan eine Verbindung der Formel I als Kettenverlängerer eingesetzt wird. Die resultierenden Produkte zeigen verbesserte Fliessfähigkeit bei guter Thermostabilität.

Erfindungsgemäss geeignete, thermostatische, aromatische Polycarbonate gemäss Komponente A) sind solche auf Basis der Diphenole der Formel (II)

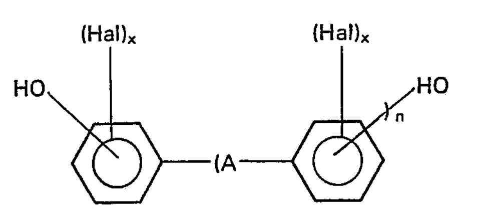

(II)

worin A eine Einfachbindung, ein $C_1$-$C_5$-Alkylen, ein $C_2$-$C_5$-Alkyliden, ein $C_5$-$C_6$-Cycloalkyliden, -S- oder -$SO_2$-, Hal, Chlor, oder Brom, x 0, 1 oder 2 und «n» 1 oder 0 sind oder die Formel (IIa)

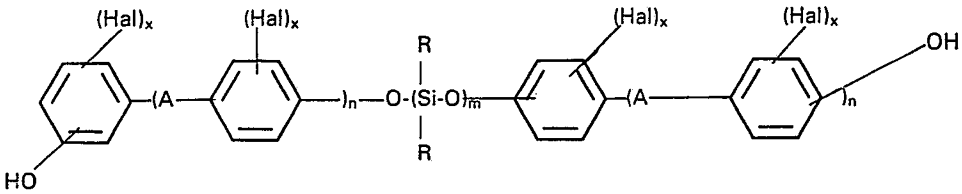
(IIa)

worin A, Hal, x und «n» die für Formel (II) genannte Bedeutung haben, und die R's gleich oder verschieden sind und ein lineares $C_1$-$C_{20}$-Alkyl, verzweigtes $C_3$-$C_{20}$-Alkyl, $C_6$-$C_{20}$-Aryl, vorzugsweise $CH_3$, sind und «m» eine ganze Zahl zwischen 5 und 100, vorzugsweise zwischen 20 und 80, ist.

Erfindungsgemäss geeignete Polycarbonate gemäss Komponente A) sind sowohl Homopolycarbonate als auch Copolycarbonate, wobei die Diphenole der Formel (IIa) nur für die Herstellung von Copolycarbonaten mit den Diphenolen der Formel (II) eingesetzt werden, wobei der Gewichtsanteil an Diphenolen der Formel (IIa) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formeln (II) und (IIa), liegt.

Die Diphenole der Formel (II) sind entweder literaturbekannt oder nach literaturbekannten Verfahren herstellbar; Polydiorganosiloxane mit Hydroxyaryloxy-Endgruppen gemäss Formel (IIa) sind ebenfalls bekannt (siehe beispielsweise US-Patent 3 419 634) beziehungsweise nach literaturbekannten Verfahren herstellbar.

Die Herstellung der erfindungsgemäss geeigneten Polycarbonate gemäss Komponente A) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 3 334 872).

Geeignete Kettenabbrecher sind beispielsweise Phenol, p-Chlorohenol, p-tert.-Butylphenol oder 2,4,6-Tribromphenol, aber auch langkettige Alkylphenole, wie 4-(1,3-Tetramethylbutyl)-phenol gemäss DE-OS 2 842 005 oder Monoalkylphenole beziehungsweise Dialkylphenole mit insgesamt 8 bis 20 C-Atomen in den Alkylsubstituenten gemäss deutscher Patentanmeldung P 3 506 472.2 (Le A 23 654) wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die erfindungsgemäss geeigneten Polycarbonate gemäss Komponente A) haben mittlere Gewichtsmittelmolekulargewichte ($\overline{M}w$, gemessen beispielsweise durch Ultrazentrifugation oder Streulichtmessung) von 10 000 bis 200 000, vorzugsweise von 20 000 bis 890 000.

Geeignete Diphenole der Formel (II) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4--hydroxyphenyl)-propan.

Bevorzugte Diphenole der Formel (II) sind 2,2-Bis-(4-hydroxyphenyl)-propan, 2,2-Bis-(3,5--dichlor-4-hydroxyphenyl)-propan, 2,2-Bis-(3,5-dibrom-4-hydroxyphenyl)-propan und 1,1-bis-(4-hydroxyphenyl)-cyclohexan.

Geeignete Diphenole der Formel (IIa) sind solche, in denen R Methyl, Ethyl, Propyl, n-Butyl, tert.-Butyl oder Phenyl ist.

Bevorzugte Diphenole der Formel (IIa) sind die der Formel (IIb)

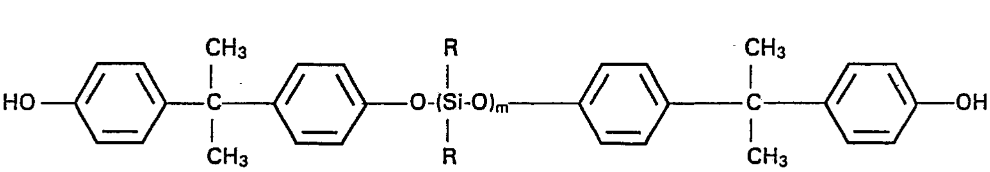
(IIb)

worin die R's gleich sind und die vorstehend genannte Bedeutung haben, also Methyl usw. oder Phenyl bedeuten und m wiederum eine ganze Zahl zwischen 5 und 100, vorzugsweise zwischen 20 und 80, ist.

Die Herstellung der Diphenole der Formel (IIa) kann beispielsweise aus den entsprechenden Bis-Chlorverbindungen (III)

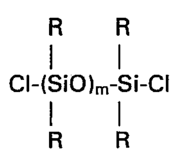
(III)

und den Diphenolen (II) beispielsweise gemäss US-Patent 3 419 634, Spalte 3 in Kombination mit US-Patent 3 189 662 erfolgen.

In den Bis-chlorverbindungen (III) haben R und m die Bedeutung wie in den Diphenolen (IIa) beziehungsweise (IIb).

Die erfindungsgemäss geeigneten Polycarbonate gemäss Komponente A) können in bekannter Weise verzweigt sein, und zwar vorzugsweise durch den Einbau von 0,05 bis 2,0 mol-%, bezogen auf die Summe der eingesetzten Diphenole, an drei- oder mehr als dreifunktionellen Verbindungen, beispielsweise solchen mit drei mehr als drei phenolischen Gruppen.

Bevorzugte Polycarbonate sind neben dem Bisphenol A-Homopolycarbonat die Copolycarbonate von Bisphenol A mit bis zu 15 mol-%, bezogen auf die Molsumme an Diphenolen, an 2,2-Bis-(3,5-dibrom-4-hydroxyphenyl)-propan oder die Copolycarbonate der Diphenole der Formel (II) mit 1 bis 20 Gew.-% an Diphenolen der Formel (IIa), vorzugsweise der Formel (IIb), bezogen jeweils auf die Gewichtssumme der Diphenole (II) und (IIa), beziehungsweise (II) und (IIb).

Zur Herstellung der Pfropfpolymerisate gemäss Komponente B) geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind z.B. Alkylendiol-di(meth)-acrylate, Polyesterdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind zum Beispiel: EPDM-Kautschuke, also Kautschuke aus Ethylen, Propylen und einem unkonjugierten Dienmonomer.

Bevorzugte Kautschuke zur Herstellung der Pfropfpolymerisate B) sind Dien- und Alkyacrylatkautschuke.

Die Kautschuke liegen im Pfropfpolymerisat B) in Form wenigstens partiell vernetzter Teilchen einer mittleren Teilchengrösse von 0,09 bis 5 µm, insbesondere 0,1 bis 1 µm vor. Die Pfropfpolymerisate B) werden durch radikalische Pfropfpolymerisation der eingangs definierten Monomerengemische aus B.1.1) und B.1.2) in Gegenwart der zu pfropfenden Kautschuke B.2) hergestellt und sind durchweg bekannt.

Bevorzugte Herstellungsverfahren für die Pfropfpolymerisate B) sind Emulsions-, Lösungs-, Masse- oder Suspensionspolymerisation. Besonders bevorzugte Pfropfpolymerisate B) sind die sogenannten ABS-Polymerisate. Als kernsubstituierte Styrole seien Halogenstyrole und p-Methylstyrol erwähnt.

Bevorzugte Copolymerisate gemäss Komponente C) sind solche aus wenigstens einem Monomeren aus der Reihe Styrol, α-Methylstyrol, kernsubstituiertem Styrol gemäss C.1) mit wenigstens einem Monomeren aus der Reihe Acrylnitril, Methacrylnitril, Methylmethacrylat, Maleinsäureanhydrid, N-subst.-Maleinimid gemäss C.2).

Copolymerisate gemäss Komponente C) entstehen häufig bei der Pfropfpolymerisation zur Herstellung der Komponente B) als Nebenprodukte, besonders dann, wenn grosse Mengen Monomere auf kleine Mengen Kautschuk gepropft werden.

Die erfindungsgemäss einzusetzende Menge an Copolymerisat C) von 0 bis 80 Gew.-Teilen, bezogen auf 100 Gew.-Teilen aus A) + B) + C), bezieht diese Nebenprodukte der Pfropfpolymerisation nicht mit ein.

Die Copolymerisate gemäss Komponente C) sind harzartig, thermoplastisch und kautschukfrei. Besonders bevorzugte Copolymerisate C) sind solche aus Styrol und/oder α-Methylstyrol mit Acrylnitril und gegebenenfalls mit Methylmethacrylat.

Besonders bevorzugte Gewichtsverhältnisse im thermoplasten Copolymerisat C) sind 60 bis 80 Gew.-% C.1) und 40 bis 20 Gew.-% C.2).

Die Copolymerisate gemäss Komponente C) sind bekannt und lassen sich durch radikalische Polymerisation, insbesondere durch Emulsions-, Suspensions-, Lösungs- oder Massepolymerisation herstellen. Die Copolymerisate gemäss Komponente C) besitzen vorzugsweise Molekulargewichte $\overline{M}w$ (Gewichtsmittel, ermittelt durch Lichtstreuung oder Sedimentation) zwischen 15 000 und 200 000.

Polyurethane gemäss Komponente D) sind Reaktionsprodukte aus aliphatischen Polyolen, vorzugsweise Diolen, mit Polyisocyanaten, vorzugsweise Diisocyanaten, die als sogenannte Kettenverlängerer die speziellen Diole der Formel (I) eingebaut enthalten, welche eine von den aliphatischen Polyolen beziehungsweise Diolen verschiedene Struktur haben.

Als Polyole, vorzugsweise Diole, werden die an sich bekannten, aliphatischen, endständige Hydroxylgruppen enthaltenden Polyester, Polyether, Polythioether, Polyesteramide, Polyacetale oder Polycarbonate mit Molekulargewichten ($\overline{M}n$) von 800 bis 3500 genutzt, ($\overline{M}n$ = Zahlenmittel, ermittelt über Endgruppenanalyse durch Umsetzung des Produktes mit Acetanhydrid und Rücktitration des nicht verbrauchten Acetanhydrids, wobei die Restmengen an freien Carboxylgruppen durch Titration mit KOH bestimmt und von dem Wert, der bei der Bestimmung mit Acetanhydrid anfällt, abgezogen wird.)

Als Polyetherpolyole insbesondere geeignet sind beispielsweise Addukte des Ethylenoxids oder Propylenoxids an Startermoleküle, wie Wasser, Glykol, 1,2-Propandiol, 1,3-Propandiol, Glycerin, Trimethyl-

olpropan oder Amine, wie $NH_3$, Ethylendiamin. Ferner eignen sich Butylenglykolpolyether sowie gemischte Polyether, die neben den genannten Komponenten noch andere Glykolreste, wie beispielsweise Phenylethylenglykolreste, eingebaut enthalten. Bevorzugt werden Dihydroxypolyether eingesetzt. Es können aber auch Gemische von Dihydroxypolyethern mit mehr als zwei OH-Gruppen enthaltenden Polyethern eingesetzt werden.

Als Hydroxylgruppen enthaltende Polyester, die vorzugsweise primäre Hydroxylgruppen aufweisen, kommen beispielsweise Polyester infrage, wie sie aus Dicarbonsäuren wie Bernsteinsäure, Adipinsäure, Cyclohexadicarbonsäure oder Terephthalsäure und Diolen wie Ethylenglykol, 1,2-Propylenglykol, 1,3-Propylenglykol, 1,4-Butandiol oder 1,6-Hexandiol erhalten werden können. Vorzugsweise werden Polyester mit zwei Hydroxylgruppen verwendet; es können aber auch Mischungen von Dihydroxypolyestern mit mehr als zwei OH-Gruppen enthaltenden Polyestern eingesetzt werden.

Endständige Hydroxylgruppen enthaltende aliphatische Polycarbonate sind für die Polyurethan-Herstellung ebenfalls geeignet. Hier seien insbesondere 1,4-Butandiolpolycarbonat und 1,6-Hexandiolpolycarbonat genannt, die beispielsweise durch Umsetzen der entsprechenden Glykole mit Diphenylcarbonat herstellbar sind.

Zur Herstellung der Polyurethane gemäss Komponente D) können auch Gemische von beliebigen der obengenannten Polyole verwendet werden, beispielsweise Gemische von Polycarbonaten mit Polyestern oder Gemische von Polyethern, Polycarbonaten und Polyacetalen.

Die zur Herstellung der Polyurhetane geeigneten Polyisocyanate sind vorzugsweise Diisocyanate wie beispielsweise 2,4-Toluylendiisocyanat und/oder dessen Gemische mit 2,6-Toluylendiisocyanat, 1,6-Hexamethylendiisocyanat, 1,4-Phenylendiisocyanat, 1,3-Phenylendiisocyanat, 4,4'-Diisocyanatodiphenylmethan und dessen Gemische mit 2,4'-Diisocyanatodiphenylmethan, 4,4'-Diisocyanatodiphenylpropan, 3,3'-Dimethyl-4,4'-diisocyanatodiphenylmethan, 4,4'-Diisocyanatodiphenyl oder 1,5-Diisocyanatonaphthalin.

Vorzugsweise verwendet man als Diisocyanate Isocyanatgruppen aufweisende Voraddukte, hergestellt aus monomeren Diioscyanaten und den vorstehend genannten Polyhydroxylverbindungen von Molekulargewicht ($\overline{M}n$) 800 bis 3500.

Die Verbindungen gemäss Formel (I) sind bekannt, beziehungsweise nach literaturbekannten Verfahren herstellbar (siehe beispielsweise US-PS 2 044 083 beziehungsweise J. Am. Soc. 79 (1957), S. 672-674). Das Molverhältnis von Kettenverlängerer (I) zu den anderen einzusetzenden Polyolen beträgt 0,3:1 bis 30:1, vorzugsweise 1:1 bis 20:1.

Die Herstellung der als Komponente D) einzusetzenden Polyurethane kann zum Beispiel nach den in der DE-OS 2 302 564 beschriebenen Verfahren erfolgen. So werden unter Einhaltung eines NCO/OH-Verhältnisses zwischen 0,97 und 1,0 die Reaktionspartner sowie an sich bekannte Aktivatoren, wie z.B. Organozinnverbindungen, über Dosierpumpen einem Mischkopf zugeführt, die reagierenden Komponenten auf ein Förderband aus Polytetrafluorethylen gebracht und durch einen Ofen mit Temperaturen von 100 bis 180°C geführt. Das Material wird in Streifen geschnitten und bei 80 bis 100°C mehrere Stunden nachgetempert.

Die Herstellung kann auch kontinuierlich durch gleichzeitige Umsetzung der Mischung aus Polyisocyanat, Polyol, Kettenverlängerer und Katalysator und Extrusion über Schneckenmachinen erfolgen. Eine weitere Herstellungsmethode ist in den Beispielen angegeben.

Die Herstellung von thermoplastischen Polyurethanen ist ausführlich auch im bereits zitierten US-Patent 4 179 479 beschrieben.

Die erfindungsgemässen Formmassen können weitere für Polycarbonate oder Pfropfpolymerisate bekannte Zusätze, wie Stabilisatoren, Pigmente, Entformungsmittel, Flammschutzmittel und/oder Antistatika, in den üblichen Mengen enthalten.

Die erfindungsgemässen Formmassen, enthaltend die Komponenten A), B), D), sowie gegebenenfalls C) und/oder gegebenanfalls weitere bekannte Zusätze wie Stabilisatoren, Pigmente, Entformungsmittel, Flammschutzmittel, und/oder Antistatika, werden hergestellt, indem man die jeweiligen Bestandteile in bekannter Weise vermischt und bei Temperaturen von 200 bis 330°C in üblichen Aggregaten, wie Innenknetern, Extrudern oder Doppelwellenschnekken schmelzcompoundiert oder schmelzextrudiert.

Gegenstand der vorliegenden Erfindung ist somit auch ein Verfahren zur Herstellung von thermoplastischen Formmassen, enthaltend die Komponenten A), B), D) und gegebenenfalls die Komponente C), Stabilisatoren, Pigmente, Entformungsmittel, Flammschutzmittel und/oder Antistatika, das dadurch gekennzeichnet ist, dass man die Komponenten A), B), D) und gegebenenfalls die Komponente C) Stabilisatoren, Pigmente, Entformungsmittel, Flammschutzmittel und/oder Antistatika in bekannter Weise vermischt und danach bei Temperaturen von 200 bis 330°C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art (z.B. Für Haushaltsgeräte, wie Saftpressen, Kaffeemaschinen, Mixer) oder Abdeckplatten für den Bausektor und Teile für den Kfz-Sektor. Sie werden ausserdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengrösse bedeutet immer mittlere Teilchendurchmesser $d_{50}$, ermittelt durch Ultrazentrifugenmessungen nach W. Scholten et al., Kolloid-Z. u.Z. Polymere 250 (1972), 782-796.

*Beispiele*

Eingesetzte Polykondensate und Polymerisate

A) Lineares Polycarbonat auf Basis Bisphenol A mit einer relativen Lösungsviskosität $\eta_{rel}$ von 1,26 bis 1,28, gemessen in $CH_2Cl_2$ bei 25°C und in einer Konzentration von 0,5 g/100 ml.

B) SAN-Pfropfpolymerisat von 50% Styrol/Acrylnitril-Gemisch (im Gewichtsverhältnis von 72:28) auf 50% teilchenförmiges Polybutadien mit einer mittleren Teilchengrösse ($d_{50}$) von 0,4 µm, erhalten durch Emulsionspolymerisation.

C) Styrol/Acrylnitril-Copolymerisat mit einem Styrol/Acrylnitril-Verhältnis von 72:28 und einer Grenzviskosität von [η] = 0,55 dl/g (Messung in Dimethylformamid bei 20°C).

Die eingesetzten Polyurethane sowie deren Zusammensetzung sind Tabelle 1 zu entnehmen.

Herstellung der Polyurethane

Die gemäss Tabelle 1 angegebenen OH-Komponenten und 10 bis 20 ppm Titantetrabutylat (bezogen auf Summe der OH-Komponenten) wurden gemischt, auf 80 bis 100°C erwärmt, mit der auf 50 bis 60°C erwärmten Diisocyanatkomponente ca. 30 s bis 1 min kräftig verrührt und auf eine Polytetrafluorethylenfolie gegossen. Der erstarrte Kuchen wurde bei ca. 100°C 2 bis 4 h getempert und nach dem Erkalten granuliert.

TABELLE 1

Zusammensetzung der verwendeten Polyurethane

| | Gew.-Teile | | | | | |
|---|---|---|---|---|---|---|
| | D 1 | D 2 | D 3 | D 4 | D 5 | D 6 |
| Polyethandiolbutandioladipat ($\bar{M}n$ ca. 2000) | 100 | 20 | — | — | — | — |
| Polyhexandiolneopentylglykoladipat ($\bar{M}n$ ca. 3000) | — | — | — | 100 | 50 | 100 |
| Polybutandioladipat ($\bar{M}n$ ca. 2000) | — | 80 | 100 | — | 50 | — |
| 4,4'-Diisocyanatodiphenylmethan | 74 | 104 | 36 | 74 | 165 | 63 |
| Butandiol-(1,4) | 22 | 33 | 8,5 | 22 | 55 | — |
| Hydrochinondihydroxyethylether | — | — | — | — | — | 40 |

Die Compoundierung der Komponenten A), B), C) und D) erfolgte auf einem 3-1-Innenkneter bei 200 bis 220°C.

Die Herstellung der Formkörper erfolgte, soweit nicht anders angegeben, auf einer Spritzgussmaschine bei 260°C.

Die Bestimmung der Kerbschlagzähigkeit nach Izod erfolgte an Stäben der Abmessung 2,5 × 1/2 × 1/8'' (63,5 × 12,7 × 3,2 mm) gemäss ASTM-D-256.

Bestimmung der Temperaturbelastbarkeitsgrenze

Das zu prüfende Material wurde 2 bis 3 h bei 110°C im Turbetuve getrocknet und anschliessend zu Musterplatten der Abmessung von 60 × 40 × 2 mm verspritzt. Die Massetemperatur wurde in 10°C-Intervallen von 270 auf 300°C erhöht. Bei jeder Temperatur wurden 10 Musterplatten hergestellt und visuell auf ihre Oberflächenbeschaffenheit hin beurteilt. Als Temperaturbelastbarkeitsgrenze (Thermostabilität) wird dabei die Temperatur angenommen, bei der sich erste Oberflächenstörungen (z.B. Schlieren) ergaben.

Die Beurteilung der Fliessfähigkeit erfolgte über den bei der verwendeten Spritzgussmaschine (Massetemperatur: 260°C) notwendigen Fülldruck (siehe Johannaber, Kunststoffe 74 (1984), 1; Seiten 1 bis 5) zur Herstellung von Stäben der Abmessung 2,5 × 1/2 × 1/8'' (63,5 × 12,7 × 3,2 mm).

Die Zusammensetzung der geprüften Materialien sowie die erhaltenen Daten sind in der folgenden Tabelle aufgeführt.

Es zeigt sich, dass der Einsatz von thermoplastischen Polyurethanen zwar die Fliessfähigkeit generell verbessert, jedoch nur Produkte mit gleichzeitig guter Zähigkeit und hoher Temperaturbelastbarkeitsgrenze erreicht werden, wenn für das erfindungsgemässe Polyurethan nur Kettenverlängerer der allgemeinen Formel (I) eingesetzt werden.

| | | | | | | | |
|---|---|---|---|---|---|---|---|
| | Vergleichsversuche | | | | | | erfindungsgemässer Versuch |
| A. (Gew.-Teile) | 60 | 60 | 60 | 60 | 60 | 60 | 60 |
| B. » | 24 | 24 | 24 | 24 | 24 | 24 | 24 |
| C. » | 16 | 16 | 16 | 16 | 16 | 16 | 16 |
| D.1 » | | 2 | | | | | |
| D.2 » | | | 2 | | | | |
| D.3 » | | | | 2 | | | |
| D.4 » | | | | | 2 | | |
| D.5 » | | | | | | 2 | |
| D.6 » | | | | | | | 2 |
| Kerbschlagzähigkeit (J/M) | 595 | 635 | 609 | 632 | 628 | 634 | 635 |
| Fülldruck (bar) | 123 | 104 | 105 | 104 | 108 | 113 | 106 |
| Temperaturbelastbarkeitsgrenze (°C) | 300 | 290 | 290 | 290 | 290 | 290 | 300 |

**Patentansprüche**

1. Thermoplastische Formmassen, enthaltend

A) 10 bis 90 Gew.-Teile eines thermoplastischen aromatischen Polycarbonats,

B) 10 bis 50 Gew.-Teile eines Pfropfpolymerisats aus

B.1) 5 bis 90 Gew.-Teile einer Mischung aus

B.1.1) 50 bis 95 Gew.-Teile Styrol, α-Methylstyrol, kernsubstituiertem Styrol, Methylmethacrylat oder Mischungen daraus, und

B.1.2) 50 bis 5 Gew.-Teile (Meth)Acrylnitril, Methylmethacrylat, Maleinsäureanhydrid, N-substituiertem Maleinimid oder Mischungen daraus, auf

B.2) 95 bis 10 Gew.-Teile eines Kautschuks mit einer Glastemperatur $T_G \leq 10°C$,

C) 0 bis 80 Gew.-Teile eines thermoplastischen Copolymerisats aus

C.1) 50 bis 95 Gew.-Teile Styrol, α-Methylstyrol, kernsubstituiertem Styrol, Methylmethacrylat oder Mischungen daraus, und

C.2) 50 bis 5 Gew.-Teile (Meth)Acrylnitril, Methylmethacrylat, Maleinsäureanhydrid, N-substituiertem Maleinimid oder Mischungen daraus, wobei die Summe der Gew.-Teile aus A) + B) + C) jeweils 100 Gew.-Teile beträgt, und

D) 0,5 bis 10 Gew.-Teile , bezogen auf die 100 Gew.-Teile der Summe aus A) + B) + C), eines oder mehrerer Polyurethane aus aliphatischen Polyolen und Polyisocyanaten, dadurch gekennzeichnet, dass das Polyurethan eine Verbindung der Formel (I)

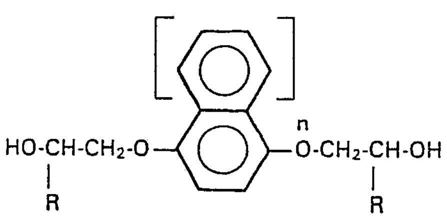 (I)

als Kettenverlängerer eingebaut enthält, worin R H, ein $C_1$- bis $C_{12}$-Alkyl, ein Cycloalkyl, ein gegebenenfalls substituiertes Aryl und n 0 oder 1 ist.

2. Formmassen gemäss Anspruch 1, dadurch gekennzeichnet, dass die Komponente D) in Mengen von 1,0 bis 5 Gew.-Teilen, bezogen auf 100 Gew.-Teile der Summe A) + B) + C), entalten ist.

3. Formmassen gemäss Ansprüchen 1 und 2, dadurch gekennzeichnet, dass sie zusätzlich mindestens einen Zusatz, ausgewählt aus der Gruppe der Stabilisatoren, Pigmente, Entformungsmittel, Flammschutzmittel und Antistatika enthalten.

4. Verfahren zur herstellung der Formmassen der Ansprüche 1 und 2, dadurch gekennzeichnet, dass man die Komponenten A), B), D) und gegebenenfalls C) in bekannter Weise vermischt und danach bei Temperaturen von 200 bis 330°C in gebräuchlichen Aggregaten schmelzcompoundiert oder schmelzextrudiert.

5. Verfahren zur Herstellung der Formmassen des Anspruchs 3 gemäss Anspruch 4, dadurch gekennzeichnet, dass man mindestens einen Zusatz, ausgewählt aus der Gruppe der Stabilisatoren, Pigmente, Entformungsmittel, Flammschutzmittel und Antistatika einbezieht.

**Claims**

1. Thermoplastic moulding compositions, containing

A) 10 to 90 parts by weight of a thermoplastic aromatic polycarbonate,

B) 10 to 50 parts by weight of a graft polymer obtained from

B.1) 5 to 90 parts by weight of a mixture of

B.1.1) 50 to 95 parts by weight of styrene, α-methylstyrene, nuclear-substituted styrene, methyl methacrylate or mixtures thereof and

B.1.2) 50 to 5 parts by weight of (meth)acryloni-

trile, methyl methacrylate, maleic anhydride, N-substituted maleinimide or mixtures thereof on

B. 2) 95 to 10 parts by weight of a rubber having a glass temperature $T_G$ of $\leq -10°C$,

C) 0 to 80 parts by weight of a thermoplastic copolymer obtained from

C.1) 50 to 95 parts by weight of styrene, α-methylstyrene, nuclear-substituted styrene, methyl methacrylate or mixtures thereof and

C. 2) 50 to 5 parts by weight of (meth)acrylonitrile, methyl methacrylate, maleic anhydride, N-substituted maleinimide or mixtures thereof, the sum of the parts by weight of A) + B) + C) being 10 parts by weight in each case, and

D) 0.5 to 10 parts by weight, relative to the 100 parts by weight of the sum of A) + B) + C), of one or more polyurethanes obtained from aliphatic polyols and polyisocyanates, characterized in that the polyurethane contains, as an incorporated chain extender, a compound of the formula (I)

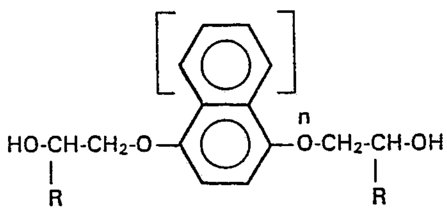

(I)

wherein R is H, a $C_1$- to $C_{12}$ -alkyl, a cycloalkyl or an optionally substituted aryl and n is 0 or 1.

2. Moulding compositions according to Claim 1, characterized in that the component D) is present in quantities of 1.0 to 5 parts by weight, relative to 100 parts by weight of the sum of A) + B) + C).

3. Moulding compositions according to Claims 1 and 2, characterized in that they additionally contain at least one additive selected from the group comprising stabilizers, pigments, release agents, flame retarders and antistatics.

4. Process for the preparation of the moulding compositions of Claims 1 and 2, characterized in that the component A), B), D) and, if appropriate, C) are mixed in a known manner and then melt-compounded or melt-extruded at temperatures of 200 to 330°C in customary units.

5. Process for the preparation of the moulding compositions of Claim 3 according to Claim 4, characterized in that at least one additive selected from the group comprising stabilizers, pigments, release agents, flame retarders and antistatics is included.

## Revendications

1. Mélanges thermoplastiques à mouler, contenant

A) 10 à 90 parties en poids d'un polycarbonate aromatique thermoplastique,

B) 10 à 50 parties en poids d'un polymère de greffage constitué de

B.1) 5 à 90 parties en poids d'un mélange de

B.1.1) 50 à 95 parties en poids de styrène, d'α-méthylstyrène, de styrène substitué sur le noyau, de méthacrylate de méthyle ou de mélanges de ces composés, et

B.1.2) 50 à 5 parties en poids de (méth)acrylonitrile, de méthacrylate de méthyle, d'anhydride d'acide maléique, de maléimide substitué sur l'atome d'azote ou de mélanges de ces composés, sur

B. 2) 95 à 10 parties en poids d'un caoutchouc ayant une température $T_G$ de transition vitreuse inférieure ou égale à 10°C,

C) 0 à 80 parties en poids d'un copolymèrisat thermoplastique formé de

C.1) 50 à 95 parties en poids de styrène, d'α-méthylstyrène, de styrène substitué sur le noyau, de méthacrylate de méthyle ou de leurs mélanges, et

C. 2) 50 à 5 parties en poids de (méth)acrylonitrile, de méthacrylate de méthyle, d'anhydride d'acide maléique, de maléimide substitué sur l'atome d'azote ou de leurs mélanges, la somme des parties en poids de A) + B) + C) s'élevant dans chaque cas à 100 parties en poids, et

D) 0,5 à 10 parties en poids, par rapport à 100 parties en poids de la somme de A) + B) + C), d'un ou plusieurs polyuréthannes dérivés de polyols et de polyisocyanates aliphatiques, caractérisés en ce que le polyuréthanne contient, incorporé, un composé de formule (I)

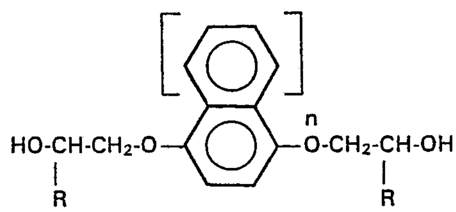

(I)

comme agent d'allongement de chaîne, formule dans laquelle R représente H, un groupe alkyle en $C_1$ à $C_{12}$, un groupe cycloalkyle, un groupe aryle éventuellement substitué et n a la valeur 0 ou 1.

2. Mélanges à mouler suivant la revendication 1, caractérisé en ce que le composant D) est présent en quantités de 1,0 à 5 parties en poids pour 100 parties en poids de la somme A) + B) + C).

5. Mélanges à mouler suivant les revendications 1 et 2, caractérisés en ce qu'ils contiennent en outre au moins un additif, choisi dans le groupe des agents stabilisants, des pigments, des agents de démoulage, des retardateurs de flamme et des agents antistatiques.

4. Procédé de production des mélanges à mouler suivant les revendications 1 et 2, caractérisé en ce qu'on mélange d'une manière connue les composants A), B), D) et, le cas échéant, C), puis on formule le mélange à l'état fondu ou on l'extrude à l'état fondu à des températures de 200 à 300°C dans des appareils classiques.

5. Procédé de production des mélanges à mouler de la revendication 3 suivant la revendication 4, caractérisé en ce qu'on incorpore au moins un additif choisi dans le groupe comprenant des agents stabilisants, des pigments, des agents de démoulage, des retardateurs de flamme et des agents antistatiques.